Europäisches Patentamt

European Patent Office

Office européen des brevets

(19)

(11) Publication number : **0 328 247 B1**

# EUROPEAN PATENT SPECIFICATION

(12)

(45) Date of publication of patent specification :
**02.01.92 Bulletin 92/01**

(51) Int. Cl.⁵ : **G01P 3/26,** G01D 3/04

(21) Application number : **89300267.5**

(22) Date of filing : **12.01.89**

(54) **Angular velocity sensor.**

(30) Priority : **13.01.88 JP 5394/88**

(43) Date of publication of application :
**16.08.89 Bulletin 89/33**

(45) Publication of the grant of the patent :
**02.01.92 Bulletin 92/01**

(84) Designated Contracting States :
**DE FR GB**

(56) References cited :
**WO-A-86/03831**
**DE-A- 2 350 083**
**US-A- 4 020 699**
**US-A- 4 026 159**
**US-A- 4 408 490**
**US-A- 4 468 968**

(73) Proprietor : **HONDA GIKEN KOGYO**
**KABUSHIKI KAISHA**
**1-1, 2-chome Minami-Aoyama**
**Minato-ku Tokyo (JP)**

(72) Inventor : **Takahashi, Tsuneo Kabushiki**
**Kaisha Honda Gijutsu**
**Kenkyusho, 4-1, 1-chome Chuo**
**Wako-shi Saitama-ken (JP)**
Inventor : **Nishio, Tomoyuki Kabushiki Kaisha**
**Honda Gijutsu**
**Kenkyusho, 4-1, 1-chome Chuo**
**Wako-shi Saitama-ken (JP)**
Inventor : **Ikegami, Masayuki Kabushiki**
**Kaisha Honda Gijutsu**
**Kenkyusho, 4-1, 1-chome Chuo**
**Wako-shi Saitama-ken (JP)**
Inventor : **Gunji, Takahiro Kabushiki Kaisha**
**Honda Gijutsu**
**Kenkyusho, 4-1, 1-chome Chuo**
**Wako-shi Saitama-ken (JP)**

(74) Representative : **Muir, Ian R. et al**
**HASELTINE LAKE & CO. Hazlitt House 28**
**Southampton Buildings Chancery Lane**
**London WC2A 1AT (GB)**

## Description

The present invention relates to an angular velocity (gas rate) sensor system which is capable of detecting the angular velocity of an angular velocity sensor body.

In general, an angular velocity sensor provides an output signal in response to any difference between the output signals supplied from a pair of thermal sensing elements. Such a difference appears when the gas flow ejected from a gas nozzle deviates, to flow more on one of the thermal sensing elements than on the other, due to the influence on the gas flow of an applied motion the angular velocity of which is to be determined in terms of its magnitude and direction.

The angular velocity is determined by detecting a small inbalance in the heat dissipation from the pair of thermal sensing elements due to the deviation of the gas flow, and therefore the surrounding temperature change significantly reduces the sensitivity of the angular velocity sensor. This necessitates the use of temperature compensating means in the angular velocity sensor.

In an attempt to reduce the adverse effects caused by the surrounding temperature the angular velocity sensor is subjected to forced heating by using appropriate heaters, and the temperature within the angular velocity sensor is detected by appropriate temperature sensors, and the temperature within the angular velocity sensor is controlled to keep it constant. Such an arrangement is disclosed in US4408490.

Disadvantageously, the sensitivity of the angular velocity sensor and the offset value remain too unstable to provide an accurate output signal until the temperature within the angular velocity sensor has reached a stable condition after connecting the electric heater to an associated power supply. Also, such forced heating makes it difficult, in practice, to control the temperature within the angular velocity sensor, to the extent that it is assured that the angular velocity sensor can provide an accurate output signal.

With the above in mind the present invention seeks to provide an angular velocity sensor system which is capable of correcting the angular velocity sensor output signal in a way so as to account for an instantaneous temperature change within the angular velocity sensor, allowing the temperature within the angular velocity sensor to vary.

According to the present invention there is provided an angular velocity sensor which provides an output signal in response to any difference between the output signals supplied from a pair of thermal sensing elements, caused when the gas flow ejected from a gas nozzle deviates to flow more on one of the thermal sensing elements than on the other due to the influence of an angular velocity applied motion, to be determined, imparted to the gas flow, characterised in that the angular velocity sensor further comprises a temperature sensor which detects the temperature within the angular velocity sensor, and a temperature compensation circuit which is responsive to the angular velocity sensor output signal and the temperature sensor output signal representing the temperature within the angular velocity sensor, the temperature compensation circuit carrying out an arithmetic operation to correct the sensor output signal, using predetermined values representing changes of the angular velocity sensor output with temperature.

For a better understanding of the present invention, and to show how it may be carried into effect, reference will now be made, by way of example, to the accompanying drawings, in which :

Figure 1 shows a diagrammatically the structure of the angular velocity (gas rate) sensor system ;

Figure 2 is a longitudinal section of the gas rate sensor ;

Figure 3 shows how the gas flow deviates when the gas rate sensor is moved at an angular velocity to be determined ; and

Figure 4 is a graph representing the temperature-to-resistance characteristics of a pair of heating wires.

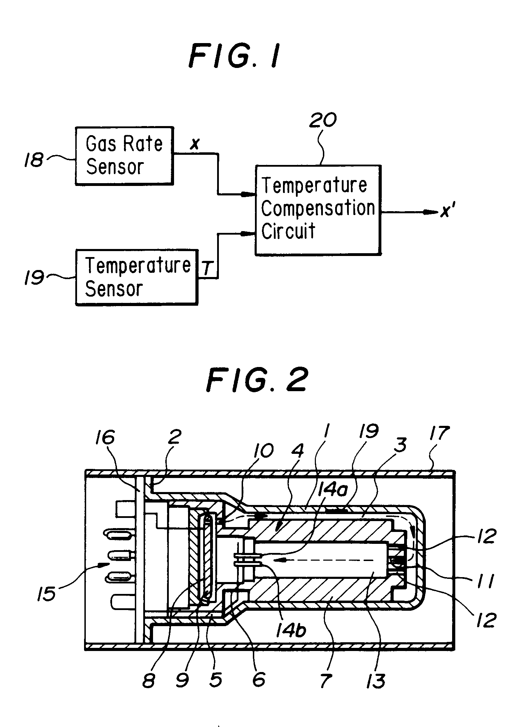

Referring to Figure 2, the casting of the gas rate sensor is open at one end, and is closed at the other end. The casting has three longitudinal ridges 120 degrees apart from each other on its inner surface. When the gas rate sensor body 4 is put in the casing 1, these longitudinal ridges define three longitudinal channels 3.

As seen from the drawing, the gas rate sensor body 4 is composed of a holder section 5, a neck section 6 and a cylinder section 7. The holder section 5 serves to confine the gas within the casing 1. The holder section 5 has a pump compartment 8, and the pump compartment 8 contains a diaphragm type piezoelectric pump 9. When the pump 9 works, gas is drawn in the longitudinal channels 3 through the inlets 10 of the holder section 5.

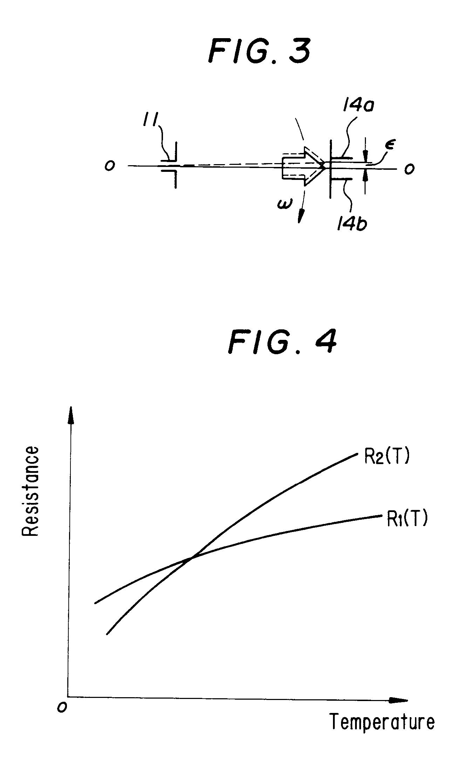

After passing through a central nozzle 11 and rectifying apertures 12 positioned around the nozzle in the end of the cylinder section 7, the gas is drawn into a sensor compartment 13 in the form of laminar flow. Then, the gas flows over a pair of heating wires 14a and 14b, which are used as thermal sensing elements and are positioned downstream of the sensor compartment 13. Thereafter, the gas flows into the pump compartment 8, where it is directed to the longitudinal channels 3 by pumping. The pair of heating wires 14a and 14b are located symmetrically with respect to the center line o-o of the nozzle 11, as seen from Figure 3. When no force is applied to the gas rate sensor in a lateral direction, the gas is ejected from the nozzle 11, flowing straight along the center line o-o, and exposing each of the heating wires 14a and 14b to an equal gas flow rate, and hence cooling each heating wire equally.

When a lateral force is applied to the gas rate sensor to cause it to move at an angular velocity $\omega$, the gas flow will deviate from the center line o-o as shown in broken line. the amount of deviation is indicated by "$\varepsilon$". As a result the gas flows more on heating wire 14a than on heating wire 14b, thus causing unbalanced outputs from these heating wires. Then, a signal representing the difference between the unbalanced outputs will appear at the output terminal of the gas rate sensor, and the output signal will be amplified by an amplifier circuit 15. The polarity and amplitude of the amplified signal represents the direction and magnitude of the angular velocity of the gas rate sensor, respectively.

A printed board 16 of the amplifier circuit 15 is attached to the flange 2 of the casing 1 as seen from Figure 2. A hollow cylinder 17 contains the whole structure of the gas rate sensor.

A signal appearing at the output terminal of the gas rate sensor is likely to vary with surrounding temperature. The sensor output signal x is given by :

$$X = (R_2(T)/R_1(T)) - 1 \quad (1)$$

where $R_1(T)$ stands for the resistance of the heating wire 14a at temperature T and $R_2(T)$ stands for the resistance of the heating wire 14b at temperature T.

If two heating wires 14a and 14b have the same temperature-to-resistance characteristic (i.e. $R_1(T)$ is equal to $R_2(T)$), and if the gas rate sensor has no angular velocity, the sensor output signal x will be zero as seen from equation (1). In this ideal case no correction of sensor output signal will be required.

In practice, however, it is difficult to select and use a pair of heating wires 14a and 14b which have the same temperature-to-resistance characteristic. Usually, two heating wires 14a and 14b have different characteristics as shown in Figure 4. Therefore, even if the gas rate sensor has no angular velocity, the gas rate sensor output signal cannot be zero. Also, an error will be caused in detecting the angular velocity of the gas rate sensor because these heating wires do not have the same temperature-to-resistance characteristic.

Necessary temperature compensation of the gas rate sensor output signal x will be effected according to the present invention as follows :

Figure 1 shows a gas rate sensor system according to one embodiment of the present invention. It comprises a gas rate sensor 18 having a temperature sensor 19 (see Figure 2) to detect the temperature within the gas rate sensor 18, and a temperature compensation circuit 20 which is responsive to the gas rate sensor output signal x and the temperature sensor output signal representing the temperature within the gas rate sensor 18. The temperature compensation circuit 20 carries out an arithmetic operation to correct the sensor output signal x, using predetermined values representing changes of the gas rate sensor output x with temperature, for instance, using values determined from a given function f (T, x). Thus, the temperature compensation circuit 20 provides a corrected sensor output signal x'.

It has been stated that the gas rate sensor output x varies with temperature T. A function f (T, x), representing the change of gas rate sensor output signal x with temperature, is determined with respect to a selected pair of heating wires 14a and 14b to be used in a particular gas rate sensor, and the function f (T, x) thus determined is put into the temperature compensation circuit 20. Then, the temperature compensation circuit 20 carries out the necessary arithmetic operation to determine the change $\Delta x$ of the gas rate sensor output signal x for the temperature which is detected by the temperature sensor, subtracting the change $\Delta x$ from the sensor output signal x to provide a corrected gas rate sensor output signal x'.

As described above, a function f (T, x) representing the change in the sensor output signal x with temperature, is determined experimentally or is presumed for a selected pair of heating wires 14a and 14b. A series of operations to determine the change $\Delta x$ of the gas rate sensor output signal x are put into the temperature compensation circuit 20. Alternatively, a plurality of changes $\Delta x$, each determined for a different temperature may be stored in a memory of the temperature compensation circuit 20, and access to a desired change $\Delta x$ may be made by addressing the memory in terms of the detected temperature T.

In an attempt to deal with the change of the gas rate sensor characteristics with time, a correction is made to a predetermined value representing the change of the gas rate sensor output signal x with temperature T as follows :

The temperature compensation circuit 20 is equipped with : first, means to detect the situation in which the difference between the gas rate sensor output signal x and the predetermined value, calculated from the predicted change of the gas rate sensor output signal x with temperature T, remains relatively small in value for a given constant time or longer ; and second, means to change the predetermined value appropriately, depending on the amount of the detected difference.

Specifically, when the situation is detected in which the difference D between the sensor output signal x and the predetermined value P, calculated from the predicted change of the gas rate sensor output signal x with temperature T, where x > D, remains within a predetermined range for a given constant time t or longer, the upper limit is corrected by adding several tens of percent (say 50%) of the difference D to the predetermined value P. Likewise, when the situation is detected in which the difference D between the sensor output signal x and the predetermined value P calculated from the predicted change of the sensor output signal x with temperature T, where x< D, remains within a predetermined range for a given constant time t or longer, the lower limit is corrected by subtracting several tens of percent (say 50%) of the difference D from the predetermined value P.

The present invention can be applied to a gas rate sensor which has no temperature control for keeping the gas within the gas rate sensor at a given constant temperature. Also, the present invention can be equally applied to a gas rate sensor equipped with temperature control. This will permit the gas rate sensor to provide an acceptable output signal immediately after connecting its heater to a power supply, thus making it unnecessary to wait until a stable temperature has been reached within the gas rate sensor.

## Claims

1. An angular velocity sensor which provides an output signal x in response to any difference between the output signals supplied from a pair of thermal sensing elements (14a, 14b), caused when the gas flow ejected from a gas nozzle (11) deviates to flow more on one of the thermal sensing elements (14a or 14b) than on the other (14a, 14b) due to the influence of an angular velocity applied motion to be determined, imparted to the gas flow, characterised in that the angular velocity sensor further comprises a temperature sensor 19 which detects the temperature T within the angular velocity sensor 18, and a temperature compensation circuit 20 which is responsive to the angular velocity sensor output signal x and the temperature sensor output signal representing the temperature within the angular velocity sensor 18, the temperature compensation circuit 20 carrying out an arithmetic operation to correct the sensor output signal x, using predetermined values representing changes of the angular velocity sensor output x with temperature.

2. An angular velocity sensor as claimed in claim 1 further comprising : means to detect whether the angular velocity sensor remains for a given time in a condition in which the difference between the angular velocity sensor output signals and the preset value is within a predetermined range ; and means to make a correction to the preset values according to the amount of difference at the time of detection.

3. An angular velocity sensor as claimed in claim 1 or 2 wherein the arithmetic operation is carried out by using a predetermined value (T, x) representing the change in the angular velocity sensor output signal x with temperature, to determine a change $\Delta x$ for the temperature detected within the angular velocity sensor, and by subtracting the change $\Delta x$ from the angular velocity sensor output signal x, thus making a correction of the angular velocity sensor output signal x, dependent on temperature.

4. An angular velocity sensor as claimed in claim 3 wherein the arithmetic operation uses the given function f (T, x) representing the change in angular velocity sensor output signal x with temperature, to determine a change $\Delta x$ for the temperature detected within the angular velocity sensor.

5. An angular velocity sensor as claimed in claim 3 wherein each change $\Delta x$ for different temperature is stored in a memory so that a desired change $\Delta x$ may be selectively read out from the memory by addressing the memory in terms of the temperature detected within the angular velocity sensor.

## Patentansprüche

1. Winkelgeschwindigkeitsaufnehmer, welcher ein Ausgangssignal (x) beim Vorliegen einer Differenz zwischen den Ausgangssignalen eines Paares von Wärmefühlern (14a, 14b) dann abgibt, wenn der aus einer Gasdüse (11) austretende Gasstrom wegen des Einflußes einer dem Gasstrom erteilten Bewegung mit zu bestimmender aufgeprägter Winkelgeschwindigkeit einen der Wärmefühler (14a oder 14b) mehr bestreicht als den anderer (14a, 14b), dadurch gekennzeichnet, daß der Winkelgeschwindigkeitsaufnehmer weiters einen die Temperatur (T) im Winkelgeschwindigkeitsaufnehmer (18) erfassenden Temperaturfühler (19) und einen auf das Ausgangssignal (x) des (Winkelgeschwindigkeitsaufnehmers und auf das die Temperatur im Winkelgeschwindigkeitsaufnehmer (18) darstellende Ausgangssignal des Temperaturfühlers ansprechenden Temperaturkompensationskreis (20) aufweist, wobei der Temperaturkompensationskreis (20) unter Verwendung vorbestimmter und Änderungen des Ausgangssignals (x) des Winkelgeschwindigkeitssensors als Folge der Temperatur darstellender vorbestimmter Werte eine arithmetische Operation zwecks Korrektur des Ausgangssignals (x) des Winkelgeschwindigkeitsaufnehmers vornimmt.

2. Winkelgeschwindigkeitsaufnehmer nach Anspruch 1, welcher weiters eine Einrichtung aufweist, welche feststellt ob der Winkelgeschwindigkeitsaufnehmer während eines gegebenen Zeitraumes in einem Zustand verbleibt, innerhalb desselben die Differenz zwischen den Ausgangssignalen des Winkelgeschwindigkeitsaufnehmers und dem vorgegebenen Wert innerhalb eines vorbestimmten Bereiches liegt, und eine Einrichtung zum Korrigieren der vorgegebenen Werte entsprechend der Größe der Differenz zum Zeitpunkt der Ermittlung aufweist.

3. Winkelgeschwindigkeitsaufnehmer nach Anspruch 1 oder 2, worin die arithmetische Operation unter Verwendung eines die Änderung des Ausgangssignals (x) des Winkelgeschwindigkeitsaufnehmers mit der Temperatur darstellenden vorbestimmten Wertes (T, x) durchgeführt wird, um eine im Winkelgeschwindigkeitsaufnehmer festgestellte Temperatüränderung (Δx) zu bestimmen und im Zuge der arithmetischen Operation die Temperaturänderung (Δx) vom Ausgangssignal (x) des Winkel-geschwindigkeitsaufnehmers subtrahiert wird, womit eine Korrektur des Ausgangssignals (x) des Winkel-geschwindigkeitsaufnehmers in Abhängigkeit von der Temperatur vorgenommen wird.

4.    Winkelgeschwirdigkeitsaufnehmer    nach Anspruch 3, worin zwecks Bestimmung der im Win-kelgeschwindigkeitsaufnehmer festgestellten Tem-peraturänderung (Δx) im Zuge der arithmetischen Operation die die Änderung des Ausgangssignals (x) im Winkelgeschwindigkeitsaufnehmer in Abhängigkeit von der Temperatur darstellende gegebene Funktion f (T, x) verwendet wird.

5.    Winkelgeschwindigkeitsaufnehmer    nach Anspruch 3, worin jede Änderung (Δx) für verschiedene Temperatur in einem Speicher so gespeichert wird, daß dem Speicher eine gewünschte Änderung (Δx) selektiv dadurch entnommen werden kann, daß der Speicher hinsichtlich der im Winkelgeschwindig-keitsaufnehmer festgestellten Temperatur addres-siert wird.

**Revendications**

1. Capteur de vitesse angulaire produisant un signal de sortie (x) en réponse à une différence entre les signaux de sortie fournis par deux éléments de détection thermique (14a, 14b), due au fait que le courant de gaz éjecté par une buse à gaz (11) s'écarte pour circuler sur un élément de détection thermique (14a ou 14b) plutôt que sur l'autre (14a, 14b) sous l'effet de l'influence d'un mouvement appliqué à une vitesse angulaire d'un mouvement imprimé au courant de gaz devant être déterminée, caractérisé en ce que le capteur de vitesse angulaire comporte également un capteur de température (19) qui détecte la température (T) à l'intérieur du capteur de vitesse angulaire (18) et un circuit de compensation de température (20) qui réagit au signal de sortie (x) du capteur de vitesse angulaire et au signal de sortie du capteur de température représentant la température dans le capteur de vitesse angulaire (18), le circuit de compensation de température (20) effectuant une opération arithmétique pour corriger le signal de sortie (x) du capteur en utilisant des valeurs prédéterminées représentant les variations de la sortie (x) du capteur de vitesse angulaire selon la température.

2. Capteur de vitesse angulaire selon la revendication 1, comportant en outre : des moyens pour détecter si le capteur de vitesse angulaire reste pendant un temps donné dans un état dans lequel la différence entre les signaux de sortie du capteur de vitesse angulaire et la valeur prédéterminée se situent dans une plage prédéterminée ; et des moyens pour effectuer une correction des valeurs prédéterminées en fonction de la valeur de la différence au moment de la détection.

3. Capteur de vitesse angulaire selon la revendication 1 ou 2, dans lequel l'opération arithmétique est effectuée en utilisant une valeur prédéterminée (T, x) représentant la variation du signal de sortie (x) du capteur de vitesse angulaire avec la température pour déterminer une variation (Δx) à la température détectée dans le capteur de vitesse angulaire et en soustrayant la variation (Δx) du signal de sortie (x) du capteur de vitesse angulaire, effectuant ainsi une correction du signal de sortie (x) du capteur de vitesse angulaire dépendant de la température.

4. Capteur de vitesse angulaire selon la revendication 3, dans lequel l'opération arithmétique utilise la fonction donnée (f) (T, x) représentant la variation du signal de sortie (x) du capteur de vitesse angulaire avec la température pour déterminer une variation (Δx) à la température détectée dans le capteur de vitesse angulaire.

5. Capteur de vitesse angulaire selon la revendication 3, dans lequel chaque variation (Δx) pour une température différente est mémorisée dans une mémoire de manière qu'une variation voulue (Δx) puisse être lue sélectivement dans la mémoire en adressant la mémoire en terme de température détectée dans le capteur de vitesse angulaire.

# FIG. 1

18 — Gas Rate Sensor

x

20

Temperature Compensation Circuit → x'

19 — Temperature Sensor

T

# FIG. 2

# FIG. 3

# FIG. 4